Europäisches Patentamt

European Patent Office

Office européen des brevets

(19)

(11) Veröffentlichungsnummer: **0 109 577**

A1

(12) ## EUROPÄISCHE PATENTANMELDUNG

(21) Anmeldenummer: 83110616.6

(22) Anmeldetag: 25.10.83

(51) Int. Cl.³: **B 62 D 25/16**

(30) Priorität: 27.10.82 DE 8230187 U

(43) Veröffentlichungstag der Anmeldung:
30.05.84 Patentblatt 84/22

(84) Benannte Vertragsstaaten:
AT BE CH DE FR GB IT LI LU NL SE

(71) Anmelder: Kotflügelfabrik H. Köver GmbH & Co KG
Estetalstrasse 45/47
D-2150 Buxtehude(DE)

(72) Erfinder: Jürges, Heinz Henning
Ellerbruch 18
D-2150 Buxtehude(DE)

(74) Vertreter: Siebert . Grättinger & Bockhorni
Postfach 1649 Almeidaweg 35
D-8130 Starnberg (München)(DE)

(54) Kotflügel in Blechkonstruktionsbauweise für insbesondere Lastkraftfahrzeuge.

(57) Ein Kotflügel (1) in Blechkonstruktionsbauweise für insbesondere Lastkraftfahrzeuge umfaßt in einem mittleren Bereich quer zu seiner Umfangsrichtung ein nachgiebig elastisches Mittelstück (2), welches randseitig in Nuten (7) des Kotflügelbleches eingesteckt ist.

Fig. 1

Croydon Printing Company Ltd.

EP 0 109 577 A1

- 1 -

## Kotflügel in Blechkonstruktionsbauweise für insbesondere Lastkraftfahrzeuge

Die Erfindung bezieht sich auf einen Kotflügel in Blechkonstruktionsbauweise für insbesondere Lastkraftfahrzeuge u. dgl.

Kotflügel sind üblicherweise aus Blech hergestellt, weil sich dadurch fertigungstechnisch die gewünschte Form des Kotflügels leicht herstellen läßt und der Kotflügel eine ausreichende Stabilität besitzt. Bei Lastkraftfahrzeugen und zwar insbesondere bei Sattelaufliegern kann es allerdings beim Durchfahren enger Kurven und auch entsprechender Aufladung zu einem Auflegen von Teilen des Lastkraftwagenaufbaus bzw. -rahmens auf die Kotflügelhaube kommen. Dies kann zu bleibenden Deformationen bei einem Kotflügel in Blechkonstruktionsbauweise führen.

Um diese Nachteile zu beheben ist man bereits dazu übergegangen, solcherart gefährdete Kotflügel anstelle aus Blech nunmehr aus Gummi, also einem ausreichend elastisch nachgiebigem Material, herzustellen, so daß der beim Aufliegen verformte Kotflügel nach Beendigung des Auflegens wieder in seine Ausgangsform zurückkehren kann. Der Verzicht auf die Blechkonstruktionsbauweise bedingt u.a. eine verringerte Stabilität des Kotflügels, was sich insbesondere ungünstig für die Halterung des Kotflügels am Fahrzeug selbst auswirkt.

Aufgabe der Erfindung ist es, einen Kotflügel zu schaffen, welcher eine ausreichende Rückstelleigenschaft besitzt, um beim Auflegen von Teilen des Fahrzeugs auf den Kotflügel verursachte Deformationen wieder rückgängig zu machen, und der dennoch ausreichend stabil ist.

Diese Aufgabe wird erfindungsgemäß durch die im Kennzeichen des Anspruch 1 angegebenen Merkmale gelöst, wobei zweckmäßige Ausgestaltungen in den Unteransprüchen angegeben sind.

Nach Maßgabe der Erfindung besitzt der Kotflügel insbesondere in seinem mittleren Bereich ein in den Kotflügel einsetzbares Teil aus elastisch nachgiebigem Material, welches aufgrund der vorhandenen Rückstelleigenschaften geeignet ist, beim Auflegen oder auch sonst auftretende Deformationen selbsttätig wieder auszugleichen. Aufgrund dieses Einsatzes ist es möglich, den übrigen Bereich des Kotflügels in der bewährten Blechkonstruktionsbauweise auszuführen, so daß insbesondere für eine stabile Halterung des Kotflügels am Fahrzeug gesorgt werden kann. Da das Zwischenteil, welches insbesondere sich im Mittelbereich des Kotflügels befindet, einsetzbar ist, also herausgenommen werden kann, erleichtert sich hierdurch beispielsweise die Montage von Schneeketten an den Fahrzeugrädern, weil nach dem Herausnehmen des Mittelstücks die Räder von oben her unmittelbar zugänglich sind.

Zweckmäßigerweise ist das Mittelstück aus elastisch nachgiebigem Material mit seinen beiden Rändern in entsprechende Nuten im Kotflügelblech, insbesondere den am Mittelstück angrenzenden Kotflügelschalen eingesteckt. Je nach Ausbildung bzw. Ausformung der Nuten im Kotflügelblech kann das Mittelstück von oben aufgesetzt oder von der Seite her in den Kotflügel eingeschoben werden.

Obgleich sich die Länge der Nut zweckmäßigerweise im wesentlichen über die Breite des Kotflügels erstreckt, ist dies nicht zwingend, vielmehr genügt auch eine bereichsweise Erstreckung der Nut bzw. eine Aufeinanderfolge von Nuten begrenzter Länge, in welche das Mittelstück ggf. mit entsprechend angeformten Verbindungsprofilen einsticht.

Zweckmäßigerweise wird die Nut im Kotflügelblech durch eine Blechprofilleiste gebildet, die von außen oder von innen auf das Kotflügelblech aufgesetzt sein kann. Das Mittelstück kann in dieser

- 4 -

Nut formschlüssig gehalten sein, wozu das Mittelstück an seinen Rändern mit Verbindungsprofilen versehen ist, welche mit dem Nutquerschnitt übereinstimmen.

In einer weiteren Ausgestaltung kann die Nut auch durch unmittelbare Ausformung, etwa eine Sicke, im Kotflügelblech hergestellt sein.

Unabhängig vom möglichen Formschluß zwischen Mittelstück und Kotflügelblech im Verbindungsbereich oder alternativ dazu können zur Befestigung des Mittelstücks auch ein axial wirkendes Spannband, radial einzusteckende Stifte oder aber die üblichen Haubenspanner verwendet werden.

Zweckmäßigerweise ist das Mittelstück im Randbereich vor der Nut bzw. vor dem durch die aufgesetzte Blechprofilleiste und dem zugeordneten Kotflügelblech begrenzten Öffnungsspalt mit einer leistenartigen Abtropfnase versehen, welche das Eindringen von Schmutz und Wasser in den Verbindungsbereich verhindert. An der Unterseite des Mittelstücks vorgesehene Rippen tragen zur Verhinderung der Sprühnebelbildung bei.

Nachfolgend werden Ausführungsbeispiele der Erfindung anhand der Zeichnung beschrieben. Darin zeigen

Fig. 1     eine perspektivische Schemaansicht
           einer Ausführungsform eines erfindungs-
           gemäßen Kotflügels,

Fig. 2     eine Seitenansicht in schematischer
           Darstellung einer weiteren Ausführungsform,

Fig. 3     eine Seitenansicht eines Teils einer
           weiteren Ausführungsform des Kotflügels
           sowie

Fig. 4     eine Draufsicht auf eine Ausführungsform
           eines Kotflügels, gleichfalls in nur
           schematischer Darstellung.

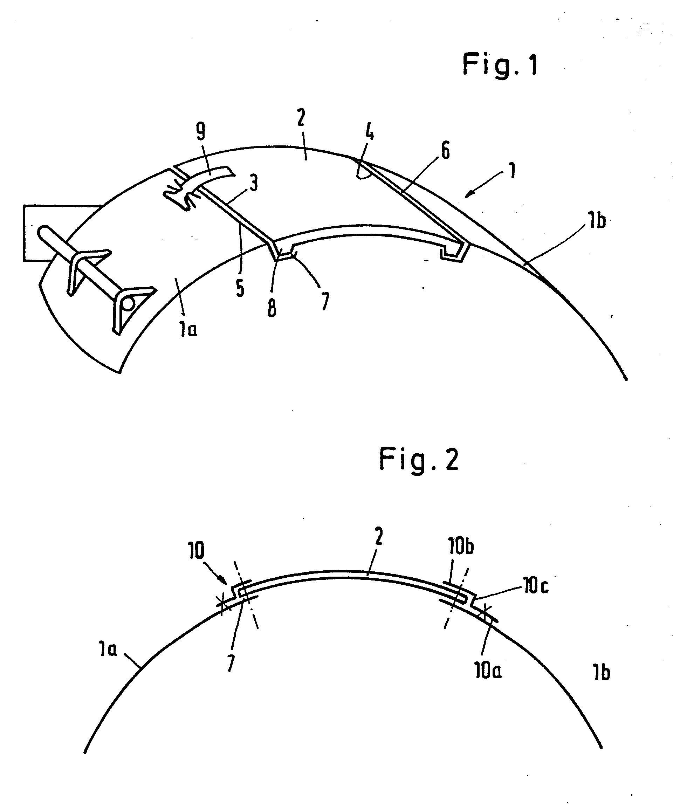

Der in Fig. 1 allgemein mit dem Bezugszeichen 1
gekennzeichnete Kotflügel besitzt ein Mittelstück 2,
das aus einem elastisch nachgiebigen Material hergestellt ist, welches vorzugsweise eine hohe Rückstellfähigkeit aufweist. Als Material eignen sich
hierzu insbesondere Gummi und Kunststoffe, wie etwa Polyurethan, EPDM u. dgl. Materialien. Das
Mittelstück 2, das sich in der Darstellung gem.
Fig. 1 über die gesamte Breite des Kotflügels 1
erstreckt, ist an seinen gegenüberliegenden Rändern
3 und 4 im übrigen Kotflügel aufgenommen. Da sich
das Mittelstück 2 über die gesamte Breite des Kotflügels 1 erstreckt, setzt sich der übrige Kotflügel aus zwei Kotflügelschalen 1a und 1b zusammen, die beide aus Blech hergestellt sind. Zur Aufnahme des Mittelstücks 2 sind an den Rändern 5 und 6 beider Kotflügelschalen 1a und 1b Ausformungen in Art einer Nut 7 ausgebildet. Im Falle von Fig. 1 ist hierzu der entsprechende Randabschnitt zur Bildung einer durchlaufenden Sicke umgefalzt, wodurch gleichzeitig auch eine Stabilisierung einer jeden Kotflügelschale 1a und 1b erreicht wird. Das Mittelstück 2 greift jeweils in die Nut 7 mit an den Rändern 3 und 4 ausgebildeten Verbindungsprofilen 8 ein, welche entsprechend dem Querschnitt der Nut 7 geformt sind. Das Mittelstück 2 bei der Ausführungsform nach Fig. 1 kann entweder von oben auf den Kotflügel 1 aufgesetzt oder von der Seite her in den Kotflügel 1 eingeschoben bzw. ausgeschoben werden, wobei die Befestigung des Mittelstücks 2 an den zugeordneten Kotflügelschalen 1a und 1b durch ein nicht dargestelltes axial wirkendes Spannband, oder durch tangential wirkende Haubenspanner 9 erfolgt, wie lediglich beispielsweise einer in Fig. 1 dargestellt ist. Obgleich sich beim dargestellten Ausführungsbeispiel die Nut 7 über die gesamte Breite des Kotflügels erstreckt, ist dies keinesfalls zwingend, vielmehr genügt auch eine bereichsweise Erstreckung der Nut bzw. mit Abstand über die Breite des Kotflügels 1 vorgesehene Nuten, in welche das Mittelstück 2 mit entsprechend ausgebildeten Verbindungsprofilen 8 einsticht.

- 7 -

Bei der Ausführungsform nach Fig. 2 ist die Nut 7 zur Aufnahme des Mittelstücks 2 durch eine auf die Außenseite einer jeden Kotflügelschale 1a und 1b aufgesetzte Blechprofilleiste 10 gebildet, welche mit der zugeordneten Schale durch Punktschweißen oder durch Verschraubung verbunden ist. Die Blechprofilleiste 10 gem. Fig. 2 besitzt zwei parallele Leistenabschnitte 10a und 10b, die durch einen normal zur Ebene der Abschnitte 10a und 10b verlaufenden Steg 10c verbunden sind. Der Vorteil dieser Ausführungsform besteht vor allem darin, daß das Mittelstück 2 keine randseitigen Profilausbildungen für die Aufnahme in den Nuten 7 erfordert, vielmehr das Mittelstück 2 mit normalem Rand in die Nuten 7 eingesteckt werden kann. Die Befestigung des Mittelstücks 2 an den zugeordneten Kotflügelschalen 1a und 1b erfolgt zweckmäßigerweise mittels Radialstiften, die in entsprechende Öffnungen der Blechprofilleiste 10, des Mittelstücks 2 und der Schalen 1a und 1b eingesetzt sind. Zweckmäßigerweise können zur Befestigung des Mittelstücks 2 am Kotflügel aber auch tangential wirkende Spanner, wie die Haubenspanner gem. Ausführungsform in Fig. 1 verwendet werden.

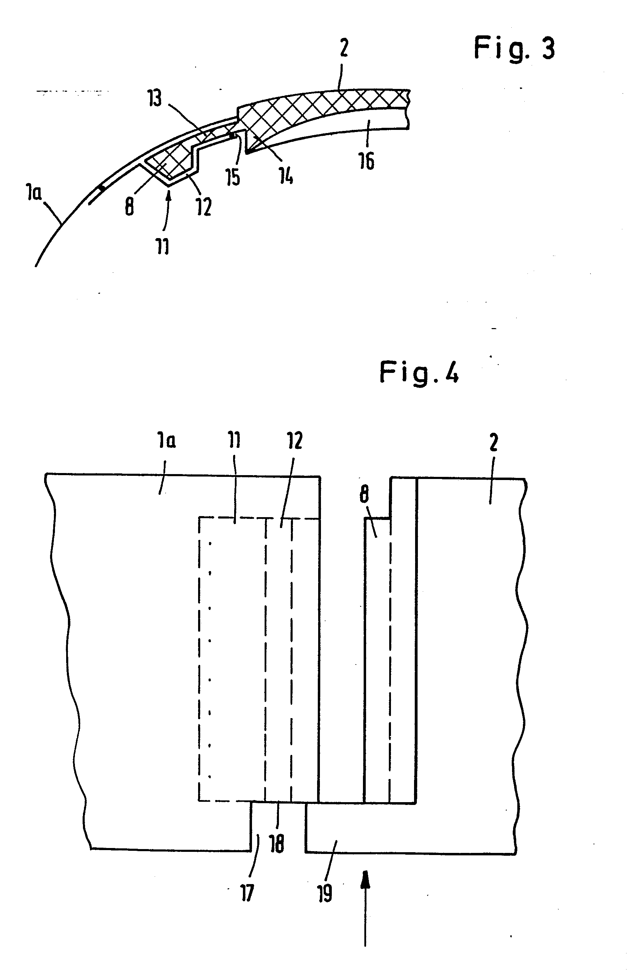

Bei der Ausführungsform nach Fig. 3 ist eine Blechprofilleiste 11 von unten auf die Innenseite der entsprechenden Kotflügelschale 1a aufgesetzt und durch Punktschweißen od. dgl. verbunden. Die Nut 7 der Blechprofilleiste 11 ist durch eine eingeformte Sicke 12 in Randnähe des Randes der Blechprofilleiste gebildet. Das Mittelstück 2 besitzt einen in Umfangsrichtung vorstehenden relativ dünnwandigen Steg 13, an dessen Ende das Verbindungsprofil 8 entsprechend des Querschnitts der Sicke
12 ausgebildet ist. Bei der Darstellung gem. Fig. 3
wird das Mittelstück 2 von der Seite her in die
zugeordneten Kotflügelblechschalen 1a und 1b eingeschoben. Bei dieser Ausführungsform sind zusätz-
-liche Befestigungsmittel nicht erforderlich, wenn
das mit Formschluß in der Blechprofilleiste 11 aufgenommene Verbindungsprofil 8 mit entsprechender
Verspannung (Materialkompression) in der Sicke 12
sitzt, so daß ein Verschieben des Mittelstücks 2
relativ zu den Schalen 1a und 1b infolge der bei
der Fahrt auftretenden stoßbedingten Beanspruchungen sowie Schwingbeanspruchungen ausgeschlossen ist.
Selbstverständlich können aber auch zusätzliche Befestigungsmittel wie im Falle der vorhergehend beschriebenen Ausführungsbeispielen vorgesehen sein.

Das in Fig. 3 dargestellte Mittelstück besitzt ferner benachbart der Blechprofilleiste 11 auf seiner
Innenseite eine nach unten gerichtete Abtropfnase
14, welche gem. Darstellung in Fig. 3 einen lippenförmigen Querschnitt besitzt. Zweckmäßigerweise
ist die Abtropfnase als durchgehende Leiste ausgebildet, wobei sie sich über die Länge der Blechprofilleiste 11 bzw. dem durch die Blechprofilleiste 11 bzw. dem durch die Blechprofilleiste 11 mit der zugeordneten Schale begrenzten Öffnungsspalt 15 erstreckt. Diese auch bei den anderen Ausführungsbeispielen zweckmäßigerweise vorzusehende Abtropfnase verhindert das Eindringen von Schmutz und Wasser in das Aufnahmeprofil des Kotflügelblechs. Ferner besitzt das in Fig. 3 dargestellte Mittelstück auf der Innenseite ausgebildete Rippen 16, die eine Sprühnebelbildung unterdrücken. Die Rippen 16 erstrecken sich in Umfangsrichtung des Mittelstücks 2 und zwar vorzugsweise zwischen den gegenüberliegenden Abtropfnasen 14.

Das elastische Mittelstück 2 ist aus einem elastisch nachgiebigen Werkstoff hergestellt, welches jedoch entsprechend hohe Rückstellfähigkeiten besitzt. Als Material eignet sich hierzu insbesondere Gummi oder Kunststoff, wie etwa Polyurethan, EPDM u. dgl.

Die Darstellung in Fig. 4 zeigt einen Teil des Mittelstücks 2 und der zugeordneten Kotflügelschale 1a. Aus Fig. 4 ist ersichtlich, daß sich die Blechprofilleiste auf seiten des Kotflügelblechs und das Verbindungsprofil am Rand des Mittelstücks 2 nicht notwendigerweise über die gesamte Breite des Kotflügels 1 erstrecken müssen, vielmehr eine wesentliche Erstreckung über die Breite des Kotflügels genügt. Bei der Ausführungsform in Fig. 4 ist an der Seite der Blechschale 1a eine Aussparung 17 vorgesehen, welche eine Schulter 18 bildet.

In diese Aussparung 17 sticht ein vorspringender Teil 19 am Rand des Mittelstücks 2 ein, wodurch ein Anschlag für die Einschiebbewegung des Mittelstücks 2 von der Seite her in die Blechschale 1a gebildet ist.

Ansprüche:

1. Kotflügel in Blechkonstruktionsbauweise für insbesondere Lastkraftfahrzeuge u. dgl., dadurch gekennzeichnet, daß der Kotflügel (1) ein Mittelstück (2) aus elastisch nachgiebigem Material besitzt, welches randseitig in Nuten (7) des Kotflügelblechs eingesteckt ist.

2. Kotflügel nach Anspruch 1, dadurch gekennzeichnet, daß sich das Mittelstück (2) im wesentlichen über die gesamte Breite des Kotflügels (1) erstreckt und mit seinen beiden gegenüberliegenden Rändern in Nuten (7) des Kotflügelblechs aufgenommen ist.

3. Kotflügel nach Anspruch 1 oder 2, dadurch gekennzeichnet, daß die Nut im Kotflügelblech durch eine auf die Außenseite oder Innenseite des Kotflügelblechs aufgesetzte Blechprofilleiste (10, 11) gebildet ist, welche durch Punktschweißen oder Verschraubung mit dem Kotflügelblech verbunden ist.

4. Kotflügel nach Anspruch 1 oder 2, dadurch gekennzeichnet, daß die Nut (7) unmittelbar im Kotflügelblech durch eine umgeformte Randkante (5 bzw. 6) gebildet ist.

- 2 -

5. Kotflügel nach einem der vorhergehenden Ansprüche,
dadurch gekennzeichnet,
daß das Mittelstück (2) an seinen Rändern (3, 4)
jeweils mit einem zur Nut (7) komplementären Verbindungsprofil (8) versehen ist.

6. Kotflügel nach einem der vorhergehenden Ansprüche,
dadurch gekennzeichnet,
daß das Mittelstück (2) benachbart den in den Nuten (7) aufgenommenen Rändern (3, 4) jeweils nach
unten vorspringende Abtropfnasen (14) besitzt.

7. Kotflügel nach Anspruch 6,
dadurch gekennzeichnet,
daß die Abtropfnasen (14) jeweils durch eine sich
über die Länge der Nut (7) oder die Länge des
zwischen der Blechprofilleiste (10, 11) und dem
Kotflügel (1) begrenzten Öffnungsspalt (15) erstreckende Leiste mit vorzugsweise lippenförmigem
Querschnitt gebildet ist.

8. Kotflügel nach einem der vorhergehenden Ansprüche,
dadurch gekennzeichnet,
daß das Mittelstück (2) an seiner Innenseite nach
unten vorspringende Rippen (16) aufweist.

9. Kotflügel nach Anspruch 8,
dadurch gekennzeichnet,
daß die Rippen (16) in Umfangsrichtung des Kotflügels (1) verlaufen.

10. Kotflügel nach Anspruch 8 oder 9,
    dadurch gekennzeichnet,
    daß die Rippen (16) sich zwischen den beiden gegenüberliegenden Abtropfnasen (14) erstrecken.

11. Kotflügel nach einem der vorhergehenden Ansprüche,
    dadurch gekennzeichnet,
    daß das Mittelstück (2) an einem Rand einen in Umfangsrichtung vorspringenden Anschlagteil (19) aufweist, der in eine einen Anschlag (18) bildende Aussparung (17) im Kotflügelblech einsticht.

12. Kotflügel nach einem der vorhergehenden Ansprüche,
    dadurch gekennzeichnet,
    daß das Mittelstück (2) am Kotflügelblech durch Haubenspanner (9), axial wirkenden Spannbänder oder Radialstifte gesichert ist.

Fig. 1

Fig. 2

Fig. 3

Fig. 4

**0109577**

Europäisches
Patentamt

**EUROPÄISCHER RECHERCHENBERICHT**

Nummer der Anmeldung

EP 83 11 0616

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | BE-A- 763 087 (FICHET)<br><br>* Figuren 1-6 * | 1,2,8, 9 | B 62 D 25/16 |
| A | DE-U-1 908 506 (BRÖDERNA FORSS)<br><br>* Seite 4, Zeilen 8-24; Figuren 1-3 * | 1,2,8, 9 | |
| A | DE-U-7 419 970 (STIDSEN) | | |
| A | FR-A-2 440 306 (BINET et al.) | | |

RECHERCHIERTE
SACHGEBIETE (Int. Cl. ³)

B 62 D 25/00

Der vorliegende Recherchenbericht wurde für alle Patentansprüche erstellt.

| Recherchenort<br>BERLIN | Abschlußdatum der Recherche<br>19-01-1984 | Prüfer<br>LUDWIG H J |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503. 03.82